# EUROPÄISCHE PATENTSCHRIFT

(11) **EP 2 288 876 B1**
(45) Veröffentlichungstag und Bekanntmachung des Hinweises auf die Patenterteilung: **13.09.2017**
(21) Anmeldenummer: 09761387.1
(22) Anmeldetag: 26.05.2009
(51) Int. Cl.: G01D 5/347, G01D 11/30

(54) **POSITIONSMESSSYSTEM**
POSITION MEASURING SYSTEM
SYSTÈME DE MESURE DE POSITION

(30) Priorität: 09.06.2008 DE 102008027400; 07.05.2009 DE 102009020205
(43) Veröffentlichungstag der Anmeldung: 02.03.2011
(73) Patentinhaber: TR Electronic GmbH, 78647 Trossingen (DE)
(72) Erfinder: SCHWARZ, Ulrich, 78532 Tuttlingen (DE)
(74) Vertreter: Patentanwälte und Rechtsanwalt Weiß, Arat & Partner mbB
(86) Internationale Anmeldenummer: PCT/EP2009/003720
(87) Internationale Veröffentlichungsnummer: WO 2009/149824

(56) Entgegenhaltungen:
- DE-A1- 4 306 539
- DE-A1- 19 812 965
- DE-B3- 10 338 265
- DE-U1-202004 010 812
- US-A1- 2002 100 182

## Beschreibung

Die Erfindung betrifft ein Positionsmesssystem mit zumindest einem Wegaufnehmer, der mit einer Aufnahmeeinheit verbunden ist, und dem Wegaufnehmer zumindest ein zweiter Wegaufnehmer zugeordnet ist, wobei sich die Enden der Wegaufnehmer überlappen.

### STAND DER TECHNIK

Wegmesssysteme oder auch Positionsmesssysteme sind in vielfältiger Form und Ausführung bekannt und auf dem Markt. Dabei gibt es lineare Messsysteme oder auch Messsysteme für einen Drehwinkel, wie beispielsweise Inkrementalgeber. Des weiteren gibt es berührende und berührungslose Messsysteme. Hierzu ist ein Geber vorhanden, der mit einem Wegaufnehmer zusammenwirkt. Das Zusammenwirken kann durch Ultraschall, magneto-induktiv, magneto-resistiv od. dgl. erfolgen.

Nur beispielsweise wird auf die DE 103 38 265 B3 verwiesen, in der ein Positionsmesssystem beschrieben wird, umfassend einen Geber und einen ersten Wegaufnehmer, an welchen der Geber berührungslos koppelt mit einer Kopplungsstärke, welche abhängig ist von der relativen Position zwischen dem ersten Wegaufnehmer und dem Geber. Des weiteren ist ein zweiter Wegaufnehmer vorgesehen, an den der Geber berührungslos mit ortsabhängiger Kopplungsstärke koppelt. Beide Wegaufnehmer sind durch eine Fixiereinrichtung relativ zueinander fixiert, so dass sich der Messbereich des Positionsmesssystems über den ersten Wegaufnehmer und den zweiten Wegaufnehmer erstreckt.

Die DE 43 06 539 A1 offenbart eine Anordnung zur Erfassung der Position des Kolbens eines Arbeitszylinders. Der Arbeitszylinder besitzt ein Gehäuse mit einem Gehäuseraum, in dem sich ein axial beweglicher Kolben befindet, der eine Magnetanordnung trägt. Mindestens ein auf die Magnetanordnung entsprechender Sensor ist ausserhalb des Gehäuseraumes an einem Trägerstab befestigt und bildet mit diesem eine auswechselbare Einschubeinheit.

Die DE 198 12 965 A1 offenbart eine Vorrichtung zum induktiven Messen der Lage eines Metallbandes, bei einer Bandlaufregeleinrichtung, wobei auf einer Seite einer Bandkante eine von einer Wechselspannung gespeiste Primärspule und auf der anderen Seite der Bandkante eine Sekundärspule angeordnet ist. Zur Erhöhung der Genauigkeit der Messung werden Spulen auf einer Leiterplatte in gedruckter Form oder mittels eines Laserstrahls aus einem Blech ausgeschnittene Spulen vorgesehen.

Die US 2002/0100182 A1 offenbart eine Anbauvorrichtung für Positionsmesssensoren. Die Positionsmesssensoren sind auf einem doppelnutförmigen Träger auf einer Aussenseite eines Zylinderrohres eines Sensors angeordnet.

Die DE 20 2004 010 812 U1 offenbart eine Spritzgiessmaschine mit integriertem Wegmesssystem. Die Spritzgiessmaschine ist dabei mit mindestens einer entlang einer Linearführung verfahrbaren Komponente und einem zugeordneten berühungslosen Wegmesssystem mit einem Positionsgeber und einem aktiven Wegaufnehmer zum Messen einer Position dieser Komponente versehen, wobei der Wegaufnehmer in die Linearführung integriert ist.

### AUFGABE

Aufgabe der vorliegenden Erfindung ist es, ein Positionsmesssystem der o.g. Art zu entwickeln, welches die Wegmessung über eine fast unbegrenzte Länge ermöglicht.

### LÖSUNG DER AUFGABE

Zur Lösung dieser Aufgabe wird ein Positionsmesssystem gemäß Anspruch 1 vorgeschlagen. Von einer entsprechenden Auswerteeinheit kann softwaremässig der Überlappungsbereich ausgeglichen werden, so dass letztendlich in der Auswerteeinheit ein exaktes über eine grosse Länge sich erstreckendes Wegmesssystem vorhanden ist. Ein Geber, der den Überlappungsbereich überfährt, wird so trotzdem exakt in seiner Position von dem Positionsmesssystem erkannt.

Das Profil ist so ausgestaltet, dass es bevorzugt beidseits, mit weiteren Profilen verbunden werden kann. Dabei bietet es sich natürlich an, die Profile identisch auszugestalten. Ferner bietet es sich an, die Profile von einem entsprechenden Aluminium-Strangpressprofil abzulängen. Bevorzugt sollte jedes Profil eine Länge aufweisen, die einer Breite einer bekannten Euro-Palette entspricht. Auf diese Weise ist es möglich, dass eine Vielzahl von Profilen auf der Euro-Palette gestapelt, transportiert und nach Abnahme von der Euro-Palette zusammengebaut werden kann.

Zur Halterung der Wegaufnehmer sind bevorzugt in den Profilen entsprechende Nuten vorgesehen. Die Wegaufnehmer können dadurch nur von der Stirnseite her in die entsprechende Nut eingeschoben werden.

Um einen Überlappungsbereich herzustellen ist es notwendig, dass zumindest ein Wegaufnehmer am Profilende herausragt und so in die korrespondierende Nut eines nachfolgenden Profils eingeschoben werden kann.

Um die entsprechenden Signale der Wegaufnehmer zu der Aufnahmeeinheit weiterzuleiten, befindet sich an jedem Profil eine Schnittstelle zu einem Folgeprofil, zu einer Auswerteeinheit oder nach aussen, die insbesondere zu einem entsprechenden BUS-System führen kann. Selbstverständlich ist es auch möglich, die einzelnen Schnittstellen bzw. Profile elektrotechnisch miteinander zu verbinden, so dass dann nur eine Verbindung zur Aufnahmeeinheit führt.

Bevorzugt weist das Profil zwei Anschlussmöglichkeiten für jeweils ein weiteres baugleiches Profil auf. Die beiden Anschlussmöglichkeiten liegen vorzugsweise an den gegenüberliegenden Enden des Profils, sodass aus mehreren baugleichen Profilen ein längerer Wegaufnehmer zusammengesetzt werden kann. Zweckmässigerweise ist das Profil ausgebildet, sodass es überlappend mit einem weiteren Profil verbunden werden kann. Bevorzugt weist das erfindungsgemässe Positionsmesssystem also eine überlappende Anschlussmöglichkeit auf. Dies bietet den Vorteil, dass in überlappenden Profilen angeordnete Wegaufnehmer nicht über die Profile hinaus stehen. Bevorzugt ist das Profil ausgebildet, sodass es überlappend mit einem weiteren baugleichen Profil verbunden werden kann. Bevorzugte Ausführungsformen der Erfindung weisen ein Profil auf, das versetzt mit einem weiteren Profil gestossen werden kann. Erfindungsgemäß umfasst das Profil zumindest zwei Teilprofile. Dies erlaubt eine grössere Automatisierungstiefe bei der Herstellung. Die zwei Teilprofile sind vorteilhafterweise im Querschnitt identisch oder im Wesentlichen identisch. Auf diese Weise lassen sich Herstellungskosten reduzieren. Dabei weisen die Teilprofile bevorzugt unterschiedliche Längen auf oder sind versetzt angeordnet. Besonders bevorzugt wird, falls die Teilprofile parallel angeordnet werden. Solche bevorzugten Teilprofile mit den bevorzugten Anordnungen schaffen eine einfache Möglichkeit, um Profile herzustellen, welche versetzt gestossen werden können. In den jeweiligen Teilprofilen sind bevorzugt jeweils Wegaufnehmer derart angeordnet, dass bei einem versetzten Stossen der Profile die Wegaufnehmer überlappend angeordnet sind.

Vorteilhafterweise ist in zumindest einem der Teilprofile eine Kabeldurchführung angeordnet. Die Kabeldurchführung ist vorzugsweise seitlich an dem Teilprofil angeordnet oder ist derart angeordnet, dass bei Überlappung der Profile die Kabeldurchführung von einem der Profile auf der Kabeldurchführung des anderen Profils von gestossenen Profilen angeordnet ist. Auf diese Weise ist eine einfache Kabeldurchführung von einem Profil in das nächste möglich.

Vorteilhafterweise umfasst das Profil ein Aluminiumstrangpressprofil oder mehrere Aluminiumstrangpressprofile, beispielsweise solche, die parallel oder versetzt zueinander oder in unterschiedlichen Längen parallel angeordnet sind. Bevorzugt ist in jeweils einem der Teilprofile eine Nut zur Aufnahme des Wegaufnehmers vorgesehen. Besonders bevorzugt wird, falls in beiden Teilprofilen jeweils eine Nut zur Aufnahme eines Wegaufnehmers vorgesehen ist.

### FIGURENBESCHREIBUNG

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine perspektivische Ansicht von zwei miteinander verbundenen Profilen des erfindungsgemässen Positionsmesssystems;
Figur 2 eine perspektivische Draufsicht auf das Ende eines der Profile des erfindungsgemässen Positionsmesssystems;
Figur 3 eine Stirnansicht des Profils gemäss Figur 2;
Figur 4 eine weitere Stirnansicht des Profils gemäss Figur 2;
Figur 5 einen Teilausschnitt eines Längsschnitts entlang Linie V-V in Figur 4.
Figur 6 eine schematische perspektivische Ansicht eines erfindungsgemässen Profils eines erfindungsgemässen Positionsmesssystems; und
Figur 7 einen Querschnitt durch das Profil der Figur 6.

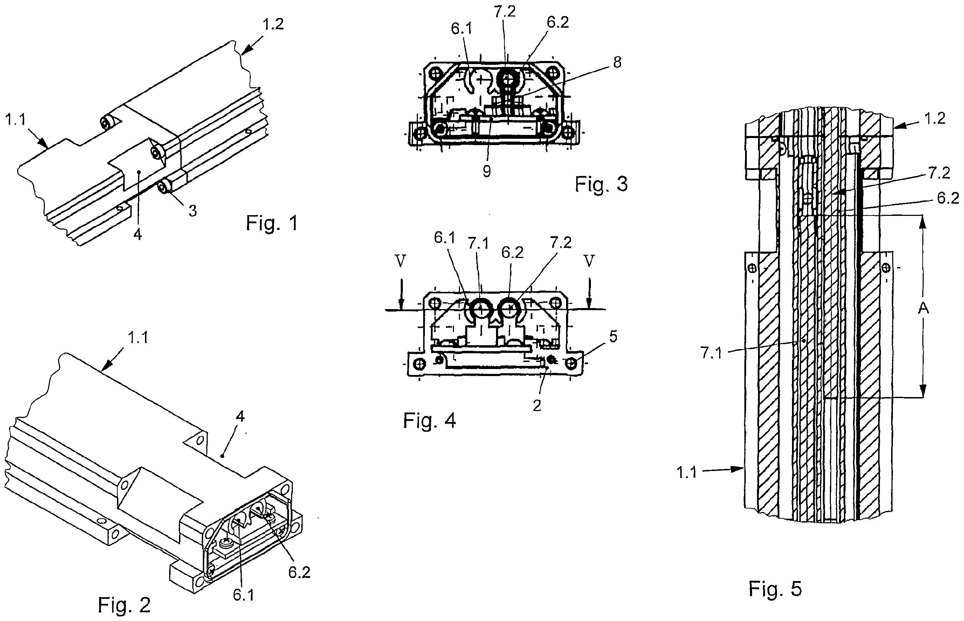

In Figur 1 ist als Teil eines Positionsmesssystems ein Verbindungsbereich zwischen zwei Profilen 1.1 und 1.2 gezeigt, die bevorzugt identisch ausgestaltet sind. Bevorzugt bestehen diese Profile 1.1, 1.2 aus einem Aluminiumstrangpressprofil und sind von diesem Strangpressprofil in einer Länge abgelängt, die in etwa einer Breite einer Euro-Palette entspricht. Damit können eine Vielzahl von derartigen Profilen auf einer Palette gestapelt und transportiert werden.

Die Profile 1.1 und 1.2 stossen mit ihren Stirnflächen aneinander, wobei eine derartige Stirnfläche 2 in Figur 4 erkennbar ist. Verbunden werden die Profile 1.1 und 1.2 mittels entsprechenden Inbusschrauben 3, die achsparallel in jeweils einen Ausschnitt 4 des einen Profils eingesetzt werden und mit einem nicht näher gezeigten Gewindeabschnitt in Gewindebohrungen 5 des anderen Profils eingreifen.

Das Innere des Profils 1.1 bzw. 1.2 wird von zwei benachbarten Nuten 6.1 und 6.2 durchzogen, wie sie in den Figuren 2 bis 4 erkennbar sind. Diese Nuten dienen der Aufnahme von Wegaufnehmer 7.1 und 7.2, die stabförmig ausgestaltet und, je nach dem um was für ein Wegmesssystem es sich handelt, aus einem entsprechenden Material hergestellt sind. In Figur 5 ist erkennbar, dass der Wegaufnehmer 7.2, der einen wesentlichen Teil des Profils 1.2 durchzieht, mit seinem freien Ende in die Nut 6.2 des nachfolgenden Profils 1.1 eingreift, so dass hier mit dem Ende des Wegaufnehmers 7.1 ein Überlappungsbereich A gebildet wird. Jeder Wegaufnehmer 7.1 bzw. 7.2 besitzt einen Anschluss 8 an eine Steuerplatine 9, die, nicht näher gezeigt, mit einer Auswerteeinheit verbunden ist.

Die Funktionsweise der vorliegenden Erfindung ist folgende:
Die Profile 1.1, 1.2 und die Wegaufnehmer 7.1 und 7.2 werden zu dem Anwendungsort gebracht. Dort werden die Wegaufnehmer 7.1 und 7.2 in die entsprechenden Nuten 6.1 und 6.2 eingeführt, wobei jeweils ein Wegaufnehmer 7.1 bzw. 7.2 endwärts aus dem Profil 1.1 bzw. 1.2 heraussteht, so dass er beim Anschluss eines nachfolgenden Profils in die entsprechende Nut 6.1 bzw. 6.2 eingeschoben werden kann.

Danach werden die Profile 1.1 und 1.2 miteinander mittels der Inbusschrauben 3 verbunden und zwar so viele Profile, wie das Positionsmesssystem lang sein soll. Dies kann bis über 100m reichen.

Die einzelnen Steuerplatinen werden entweder ebenfalls miteinander verbunden oder direkt mit einer Auswerteeinheit. In dieser Auswerteeinheit findet ein softwaremässiger Ausgleich des Überlappungsbereiches A statt, so dass in der Auswerteeinheit letztendlich eine lineare Wegmessstrecke einer vorgegebenen Länge gebildet ist. Entlang dieser Wegmessstrecke kann dann ein entsprechender Geber entlangfahren, dessen Position von den einzelnen Wegaufnehmern 7.1, 7.2 aufgenommen und der Auswerteeinheit mitgeteilt wird.

Ist die Länge der Wegmessstrecke ungerade, so wird vom letzten Profil das noch fehlende Stück der Wegmessstrecke abgelängt und mit dem vorletzten Profil verbunden.

Jedes Profil 1.1 bzw. 1.2 bzw. die Steuerplatine 9 besitzt eine BUS-Schnittstelle zu einem weiteren Profil oder zur Auswerteeinheit.

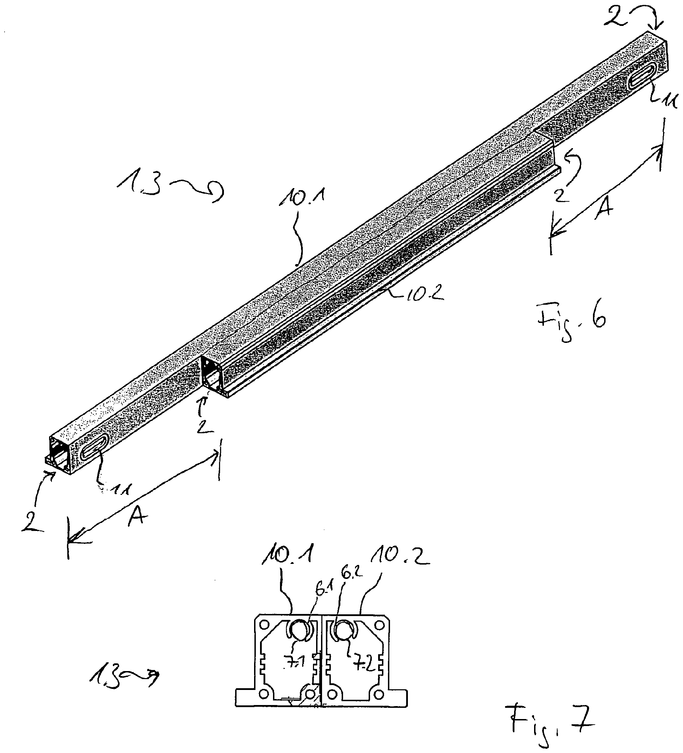

In der Figur 6 ist ein erfindungsgemässes Profil 1.3 gezeigt, welches für ein erfindungsgemässes Positionsmesssystem geeignet ist. Das Profil 1.3 weist aufgeteilte Stirnflächen an beiden Enden des Profils 1.3 auf. Die aufgeteilten Stirnflächen sind dadurch bedingt, dass das Profil 1.3 zwei unterschiedlich lange Teilprofile 10.1 und 10.2 umfasst, die parallel angeordnet und miteinander verbunden sind. Das Teilprofil 10.1 weist einen identischen Querschnitt wie das Teilprofil 10.2 auf, wobei es jedoch um 180° um die Hochachse gedreht ist. Ausserdem ist das Teilprofil 10.1 länger als das Teilprofil 10.2 und mit dem Teilprofil 10.2 derart verbunden, dass das Teilprofil 10.1 an beiden Enden des Teilprofils 10.2 um einen Überlappungsbereich A übersteht.

Beide Teilprofile 10.1 und 10.2 weisen in ihrem Inneren Nuten für die Aufnahme von Wegaufnehmern auf. Die Nuten und die Wegaufnehmer werden im Zusammenhang mit der Figur 7 erläutert.

Werden zwei baugleiche Profile 1.3 hintereinander angeordnet, wobei eines der beiden Profile 1.3 gegenüber dem anderen Profil 1.3 um die Hochachse um 180° verdreht angeordnet ist, so überlappen sich die beiden Teilprofile 10.1 der beiden Profile 1.3 um den Überlappungsbereich A. In den Teilprofilen 10.1 jeweils angeordnete Wegaufnehmer überlappen sich auf diese Weise ebenso.

Eine andere bevorzugte Ausführungsvariante eines erfindungsgemässen Profils sieht vor, dass die Teilprofile derart ausgebildet sind und aneinander gefügt sind, sodass ein Teilprofil an einem Ende um einen Überlappungsbereich gegenüber dem anderen hervorsteht und das andere Teilprofil gegenüber dem einen Teilprofil am anderen Ende übersteht. Die in den Teilprofilen angeordneten Wegaufnehmer überlappen sich wiederum um den jeweiligen Überlappungsbereich.

Das Teilprofil 10.1 verfügt über Kabeldurchführungen 11, welche jeweils in dem Überlappungsbereich A des Teilprofils 10.1 auf der Seite des Teilprofils 10.1 angeordnet sind, welche bei einem Zusammenfügen mit einem baugleichen Profil 1.3 auf der jeweiligen entsprechenden Fläche des anderen Profils 1.3 zu liegen kommt. Die Kabeldurchführungen 11 können auch dazu verwendet werden, die oben beschriebenen Anschlüsse 8 an dem Teilprofil 10.1 des Profils 1.3 auszubilden.

Die Figur 7 zeigt einen mittigen Querschnitt durch das Profil 1.3 der Figur 6, wobei zu erkennen ist, dass die Teilprofile 10.1 und 10.2 aus dem selben Stranggussprofil hergestellt sind. Sie weisen jeweils über Nuten 6.1 und 6.2 zur Aufnahme von Wegaufnehmern 7.1 und 7.2 auf. Anzumerken ist, dass in der Figur 7 in beiden Teilprofilen 10.1 und 10.2 die Wegaufnehmer 7.1 und 7.2 eingezeichnet sind, es ist jedoch auch möglich, lediglich in dem Teilprofil 10.1 einen Wegaufnehmer 7.1 in der Nut 6.1 vorzusehen, da bei Aneinanderfügen von baugleichen Profilen sich auf diese Weise die jeweiligen Wegaufnehmer 7.1 bereits um den Überlappungsbereich A überlappen.

Die Funktionsweise der bevorzugten Ausführungsform, wie sie in den Figuren 6 und 7 dargestellt ist, wurde bereits oben im Zusammenhang mit den Figuren 1 bis 5 erläutert, sodass an dieser Stelle nicht noch einmal auf die Funktionsweise eingegangen wird. Anzumerken ist, dass die Auswertung der Signale der Wegaufnehmer 7.1 und eventuell 7.2 des Profils 1.3 der Figuren 6 und 7 durch dieselben Auswerteeinheiten mit den selben Algorithmen erfolgen können wie oben im Zusammenhang mit den Ausführungsbeispielen der Figuren 1 bis 5 beschrieben.

**Bezugszeichenliste**

| | | | | | |
|---|---|---|---|---|---|
| 1 | Profil | 34 | | 67 | |
| 2 | Stirnfläche | 35 | | 68 | |
| 3 | Inbusschraube | 36 | | 69 | |
| 4 | Ausschnitt | 37 | | 70 | |
| 5 | Gewindebohrung | 38 | | 71 | |
| 6 | Nut | 39 | | 72 | |
| 7 | Wegaufnehmer | 40 | | 73 | |
| 8 | Anschluss | 41 | | 74 | |
| 9 | Steuerplatine | 42 | | 75 | |
| 10 | Teilprofile | 43 | | 76 | |
| 11 | Kabeldurchführungen | 44 | | 77 | |
| 12 | | 45 | | 78 | |
| 13 | | 46 | | 79 | |
| 14 | | 47 | | | |
| 15 | | 48 | | A | Überlappungsbereich |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Positionsmesssystem mit zumindest einem Wegaufnehmer (7.1), der mit einer Aufnahmeeinheit verbunden ist, und dem Wegaufnehmer (7.1) zumindest ein zweiter Wegaufnehmer (7.2) zugeordnet ist, wobei sich die Enden der Wegaufnehmer überlappen, wobei mindestens zwei Profile (1.1, 1.2, 1.3) vorgesehen sind, welche jeweils zwei Teilprofile (10.1, 10.2) umfasssen, wobei die Teilprofile (10.1, 10.2) unterschiedliche Längen aufweisen und/oder versetzt zueinander angeordnet sind, wobei die Wegaufnehmer (7.1, 7.2) jeweils in einem Teilprofil (10.1, 10.2) angeordnet sind;
und wobei die zwei Profile überlappend miteinander verbunden sind, so dass zumindest ein Wegaufnehmer (7.1, 7.2) mit einem Ende in das benachbarte Profil eingreift.

2. Positionsmesssystem nach Anspruch 1, **dadurch gekennzeichnet, dass** das Profil (1.1, 1.3) zumindest eine Anschlussmöglichkeit für zumindest ein weiteres Profil (1.2, 1.3) aufweist.

3. Positionsmesssystem nach Anspruch 1 oder 2, **dadurch gekennzeichnet, dass** das Profil (1.1, 1.3) zwei Anschlussmöglichkeiten für jeweils ein weiteres baugleiches Profil (1.2, 1.3) aufweist.

4. Positionsmesssystem nach einem der Ansprüche 1 bis 3, **dadurch gekennzeichnet, dass** an einem der Teilprofile (10.1 , 10.2) eine Kabeldurchführung (11) angeordnet ist.

5. Positionsmesssystem nach einem der Ansprüche 1 bis 4, **dadurch gekennzeichnet, dass** das Profil (1.1,1.2, 1.3) ein Aluminium-Strangpressprofil ist und/oder Aluminium-Strangpressprofile umfasst.

6. Positionsmesssystem nach einem der Ansprüche 1 bis 5, **dadurch gekennzeichnet, dass** das Profil (1.1,1.2) die Länge einer Euro-Palette aufweist.

7. Positionsmesssystem nach einem der Ansprüche 1 bis 6, **dadurch gekennzeichnet, dass** in dem Profil (1.1,1.2, 1.3) zwei Nuten (6.1,6.2) zur Aufnahme des/der Wegaufnehmer (7.1,7.2) vorgesehen sind.

8. Positionsmesssystem nach Anspruch 7, **dadurch gekennzeichnet, dass** der in das benachbarte Profil (1.1,1.2) eingreifende Wegaufnehmer (7.1,7.2) dort ebenfalls in einer Nut (6.1,6.2) geführt ist.

## Claims

1. A position measuring system with at least one position pickup (7.1) which is connected to a pickup unit, and at least a second position pickup (7.2) is associated with the position pickup (7.1), wherein the ends of the position pickups overlap,
wherein at least two profiles (1.1, 1.2, 1.3) are provided, which comprise in each case two partial profiles (10.1, 10.2), wherein the partial profiles (10.1, 10.2) are of different lengths and/or are arranged offset relative to each other,
wherein the position pickups (7.1, 7.2) are arranged in each case in a partial profile (10.1, 10.2);
and wherein the two profiles are connected together overlapping, so that at least one position pickup (7.1, 7.2) engages by one end in the adjacent profile.

2. A position measuring system according to Claim 1, **characterised in that** the profile (1.1, 1.3) has at least one connection possibility for at least one further profile (1.2, 1.3).

3. A position measuring system according to Claim 1 or 2, **characterised in that** the profile (1.1, 1.3) has two connection possibilities for one further profile (1.2, 1.3) in each case.

4. A position measuring system according to one of Claims 1 to 3, **characterised in that** a cable bushing (11) is arranged on one of the partial profiles (10.1, 10.2).

5. A position measuring system according to one of Claims 1 to 4, **characterised in that** the profile (1.1, 1.2, 1.3) is an extruded aluminium profile and/or comprises extruded aluminium profiles.

6. A position measuring system according to one of Claims 1 to 5, **characterised in that** the profile (1.1, 1.2) has the length of a Euro-pallet.

7. A position measuring system according to one of Claims 1 to 6, **characterised in that** two grooves (6.1, 6.2) for receiving the position pickup(s) (7.1, 7.2) are provided in the profile (1.1, 1.2, 1.3).

8. A position measuring system according to Claim 7, **characterised in that** the position pickup (7.1, 7.2) which engages in the adjacent profile (1.1, 1.2) is likewise guided in a groove (6.1, 6.2) there.

## Revendications

1. Système de mesure de position avec au moins un capteur de trajet (7.1) qui est connecté à une unité de réception, et au capteur de trajet (7.1) étant associé au moins un deuxième capteur de trajet (7,2), les extrémités des capteurs de trajet se recouvrant,
dans lequel sont prévus au moins deux profilés (1.1, 1.2, 1.3) qui comportent, chacun, deux profilés partiels (10.1, 10.2), dans lequel les profilés partiels (10.1, 10.2) présentent des longueurs différentes et/ou sont disposés décalés l'un par rapport à l'autre,
dans lequel les capteurs de trajet (7.1, 7.2) sont, chacun, disposés dans un profilé partiel (10.1, 10.2);
et dans lequel les deux profilés sont connectés l'un à l'autre en venant en recouvrement, de sorte qu'au moins un capteur de trajet (7.1, 7.2) vienne en prise par une extrémité dans le profilé adjacent.

2. Système de mesure de position selon la revendication 1, **caractérisé par le fait que** le profilé (1.1, 1.3) présente au moins une possibilité de raccordement d'au moins un autre profilé (1.2, 1.3).

3. Système de mesure de position selon la revendication 1 ou 2, **caractérisé par le fait que** le profilé (1.1, 1.3) présente deux possibilités de raccordement de chaque fois un autre profilé de même construction (1.2, 1.3).

4. Système de mesure de position selon l'une des revendications 1 à 3, **caractérisé par le fait que** sur l'un des profilés partiels (10.1, 10.2) est disposé un passage de câble (11).

5. Système de mesure de position selon l'une des revendications 1 à 4, **caractérisé par le fait que** le profilé (1.1, 1.2, 1.3) est un profilé extrudé en aluminium et/ou comporte des profilés extrudés en aluminium.

6. Système de mesure de position selon l'une des revendications 1 à 5, **caractérisé par le fait que** le profilé (1.1, 1.2) présente la longueur d'une palette euro.

7. Système de mesure de position selon l'une des revendications 1 à 6, **caractérisé par le fait que** dans le profilé (1.1, 1.2, 1.3) sont prévues deux rainures (6.1, 6.2) destinées à recevoir le ou les capteurs de trajet (7.1, 7.2).

8. Système de mesure de position selon la revendication 7, **caractérisé par le fait que** le capteur de trajet (7.1, 7.2) s'engageant dans le profilé adjacent (1.1, 1.2) y est également guidé dans une rainure (6.1, 6.2).
